# EUROPEAN PATENT SPECIFICATION

(11) **EP 3 984 185 B1**
(45) Date of publication and mention of the grant of the patent: **16.07.2025**
(21) Application number: 19933568.8
(22) Date of filing: 17.06.2019
(51) Int. Cl.: H04L 65/1016, H04L 65/1069, H04L 65/80, H04L 67/141, H04W 76/12

(54) **METHODS, APPARATUSES AND SYSTEMS FOR SESSION ESTABLISHMENT IN A WIRELESS COMMUNICATION NETWORK**
VERFAHREN, VORRICHTUNGEN UND SYSTEME ZUR SITZUNGSHERSTELLUNG IN EINEM DRAHTLOSEN KOMMUNIKATIONSNETZ
PROCÉDÉS, APPAREILS ET SYSTÈMES D'ÉTABLISSEMENT DE SESSION DANS UN RÉSEAU DE COMMUNICATION SANS FIL

(43) Date of publication of application: 20.04.2022
(73) Proprietor: ZTE Corporation, Shenzhen Guangdong 518057 (CN)
(72) Inventor: LI, Zhendong, Shenzhen, Guangdong 518057 (CN)
(74) Representative: Vossius & Partner Patentanwälte Rechtsanwälte mbB
(86) International application number: PCT/CN2019/091537
(87) International publication number: WO 2020/252625

(56) References cited:
- EP-A1- 2 362 587
- WO-A1-2020/248582
- CN-A- 102 958 046
- CN-A- 104 144 157
- US-A1- 2017 180 431
- HUAWEI ET AL: "System enhancement for TSN logical bridge management", vol. SA WG2, no. Santa Cruz, Tenerife, ES; 20190225 - 20190301, 19 February 2019 (2019-02-19), XP051610581, Retrieved from the Internet <URL:http://www.3gpp.org/ftp/tsg%5Fsa/WG2%5FArch/TSGS2%5F131%5FTenerife/Docs/S2%2D1902012%2Ezip> [retrieved on 20190219]
- HUAWEI ET AL: "Updates on Solution #18", vol. SA WG2, no. West Palm Beach, USA; 20181126 - 20181130, 20 November 2018 (2018-11-20), XP051490408, Retrieved from the Internet <URL:http://www.3gpp.org/ftp/tsg%5Fsa/WG2%5FArch/TSGS2%5F129BIS%5FWest%5FPalm%5FBeach/Docs/S2%2D1812232%2Ezip> [retrieved on 20181120]

## Description

### TECHNICAL FIELD

The disclosure relates generally to wireless communications and, more particularly, to methods, apparatuses and systems for session establishment in a wireless communication network.

### BACKGROUND

The 4th Generation mobile communication technology (4G) Long-Term Evolution (LTE) or LTE-Advance (LTE-A) and the 5th Generation mobile communication technology (5G) face more and more demands. One of the important goals of the 5G system is to support industrial Internet and vertical industry applications, where a time sensitive network (TSN) can meet the strict requirements of industrial applications for both delay and reliability. A 5G system may support the TSN traffic if the 5G system is enhanced to serve as a virtual bridge for the TSN network. That is, from the perspective of the TSN network, the 5G system will look like a TSN bridge entity.

For a particular TSN network, a virtual TSN bridge can utilize the same user plane function (UPF) of the 5G system to handle all PDU sessions targeted to that particular TSN network. However, it is currently unclear how the 5G system will manage such a virtual TSN bridge. Thus, existing systems and methods for establishing and managing PDU sessions in a TSN are not entirely satisfactory.

3GPP Draft S2-1902012 and 3GPP Draft S2-1812232 are related prior art documents that disclose the features in the preamble of the independent claims.

### SUMMARY OF THE INVENTION

The invention is specified by the independent claims. Preferred embodiments are defined in the dependent claims. In the following description, although numerous features may be designated as optional, it is nevertheless acknowledged that all features comprised in the independent claims are not to be read as optional. The exemplary embodiments disclosed herein are directed to solving the issues relating to one or more of the problems presented in the prior art, as well as providing additional features that will become readily apparent by reference to the following detailed description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

### BRIEF DESCRIPTION OF THE DRAWINGS

Various exemplary embodiments of the present disclosure are described in detail below with reference to the following Figures. The drawings are provided for purposes of illustration only and merely depict exemplary embodiments of the present disclosure to facilitate the reader's understanding of the present disclosure. Therefore, the drawings should not be considered limiting of the breadth, scope, or applicability of the present disclosure. It should be noted that for clarity and ease of illustration these drawings are not necessarily drawn to scale.
Figure 1 illustrates an exemplary diagram of a TSN network in which methods and features of the invention disclosed herein can be implemented, in accordance with some embodiments of the invention.
Figure 2 illustrates an exemplary diagram of a 5G system serving as a virtual TSN bridge for a TSN network, in accordance with some embodiments of the invention.
Figure 3 illustrates an exemplary diagram of a 5G system serving as a virtual TSN bridge for a plurality of TSN networks, in accordance with some embodiments of the invention.
Figure 4 illustrates an exemplary diagram of the virtual TSN bridge of Figure 3 from the perspective of a first TSN, in accordance with some embodiments of the invention.
Figure 5 illustrates an exemplary diagram of the virtual TSN bridge of Figure 3 from the perspective of a second TSN, in accordance with some embodiments of the invention.
Figure 6 illustrates an exemplary method for session establishment in a wireless communication network, in accordance with some embodiments of the invention.
Figure 7 illustrates an exemplary method for session establishment in a wireless communication network, in accordance with further embodiments of the invention.
Figure 8 illustrates a block diagram of an exemplary network node that may perform one or more of the functions disclosed herein, in accordance with some embodiments of the invention.

### DETAILED DESCRIPTION OF EXEMPLARY EMBODIMENTS

Various exemplary embodiments of the present disclosure are described below with reference to the accompanying figures to enable a person of ordinary skill in the art to make and use the present disclosure. As would be apparent to those of ordinary skill in the art, after reading the present disclosure, various changes or modifications to the examples described herein can be made without departing from the scope of the present disclosure. Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

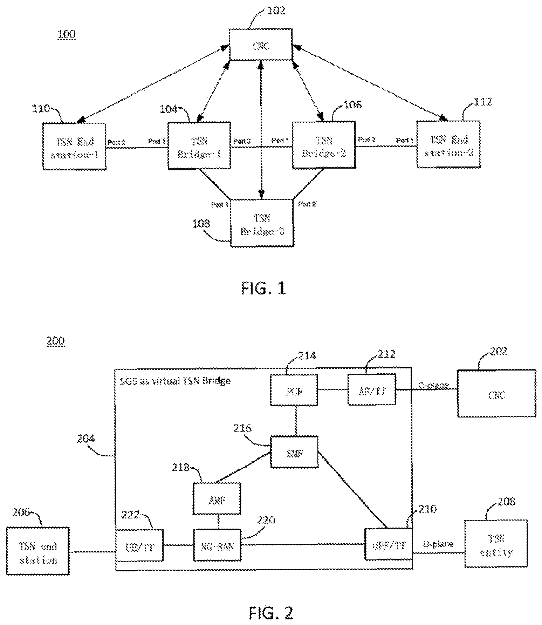

Figure 1 illustrates an exemplary block diagram of a centralized mode TSN network 100, which is an exemplary environment in which the methods, apparatuses and systems disclosed herein may be implemented. As shown in Figure 1, the TSN network 100 includes a centralized network controller (CNC) 102, a first TSN bridge 104, a second TSN bridge 106, a third TSN bridge 108, a first TSN end station 110 and a second TSN end station 112. In some embodiments, the CNC 102 controls and configures all the TSN nodes 104-112 within the TSN network 100. In some embodiments, each of the nodes 104-112 can report its respective capabilities and neighborhood topology (e.g., other nodes it is directly connected to) to the CNC 102. After getting such information, the CNC 102 can construct the topology of the entire TSN network 100. Thus, when TSN service traffic is to be established, the CNC 102 can calculate an end-to-end path for the TSN service traffic taking into account respective TSN node capabilities, link capabilities and the TSN network topology.

In some embodiments, some or all of the first, second and third TSN bridges 104, 106 and 108 can be implemented as a switch or router with enhanced functionality, as described in further detail below. In some embodiments, some or all of the first, second and third TSN bridges 104, 106 and 108 can be implemented by utilizing enhanced nodes of a 5G system, as described in further detail below. Furthermore, in accordance with various embodiments, each of the first and second TSN end stations 110 and 112 may be any device, machine or system that is capable of communicating with (i.e., "communicatively coupled to") one or more of the TSN bridges 104, 106 and 108.

For example, in some embodiments, the first TSN end station 110 may be surgical machinery in a hospital having communication circuitry for performing wireless and/or wired communications via the Internet. Such surgical machinery can receive commands from a remotely located surgeon to perform a surgery in real-time and, therefore, requires low-latency and high-reliability communications with the remotely located surgeon (not shown), who provides commands to the surgical machinery. The second TSN end station 112 may be surgical interface that can be operated by the surgeon to provide commands to and control the surgical machinery located far away (e.g., across the globe) from the surgeon. Needless to say, such a procedure requires an extremely low-latency and highly reliable communication session to be established and maintained. This is just an example of the many possible applications of a TSN network and the embodiments of the invention described herein.

Referring still to Figure 1, each TSN node (e.g., bridge nodes 104, 106 and 108, and end stations 110 and 112) can report its capabilities to the CNC 102. For example, the first TSN bridge 104 can transmit the following capability information per port pair within the node: (Bridge-1 ID, port1, port2) {(class 0, 2ns delay), (class 1, 5ns delay), ... (class 8, . . .)},which indicates supported traffic class and corresponding delay associated with the indicated port pair. In this example, for the port 1/port 2 pair, for class 0 traffic there is a 2ns delay from when the TSN bridge 104 receives the data in port1 and sends out the data in port 2, or vice versa. For class 1 traffic, this delay will be 5ns from when the TSN bridge 104 receives the data in port 1 and sends out the data in port 2, or vice versa, etc. As would be understood by persons of skill in the art, actual delay information is more complex and includes many factors and parameters. Currently, there are eight defined traffic classes for TSN communications.

As mentioned above, each TSN node 104-112 can report its topology information to the CNC 102. In some embodiments, a TSN node or entity can use the 802.1AB protocol specification to find its "neighbor" information (e.g., other nodes it is directly connected with). For example, the first TSN bridge 104 can report the following information to the CNC 102: (Bridge-1 ID, port-1, TSN end station-1 ID, port-1, link delay=5µs), (Bridge-1 ID, port2, Bridge-2 ID, port1, link delay=1µs). This means that port 1 of Bridge-1 connects to port-1 of TSN end station-1, with a link delay of 5µs, and the port-2 of Bridge-1 connects to port-1 of TSN Bridge-2, with a link delay of 1µs.

After receiving the topology information from each of the nodes in the TSN Network 100, the CNC 102 can then calculate the topology and capabilities of the entire TSN network 100. When TSN service traffic is to be established, the CNC 102 can calculate an end-to-end path according to the TSN node capabilities, link capabilities and the TSN network topology information. For example, if the first TSN end station 110 desires to send class X data traffic to the second TSN end station 112, the CNC 102 will calculate the end-to-end path and configure the corresponding TSN nodes to support such data session.

Figure 2 illustrates a block diagram of a TSN 200, in accordance with some embodiments of the invention. The TSN 200 includes a CNC 202, at least portions of a 5G system 204 which functions a virtual TSN bridge, a TSN end station 206 and a TSN entity 208, which can be another TSN bridge or end station, for example. The CNC 202, TSN end station 206 and TSN entity 208 can be similar to corresponding nodes described above and, therefore, their descriptions are not repeated here.

As shown in Figure 2, the 5G system 204 includes various nodes to provide a virtual or logical TSN bridge. This logical TSN bridge includes TSN Translator (TT) functionality that allows for interoperation between the TSN system and 5G system both for the user plane, implemented by an enhanced user plane function node with TT functionality (UPF/TT) 210, and the control plane, implemented by an enhanced application function node with TT functionality (AF/TT) node 212. The virtual TSN bridge 204 further includes a policy control function (PCF) node 214, a session management function (SMF) node 216, an access and mobility management function (AMF) node 218, a next generation radio access network (NG-RAN) node 220 (e.g., a gNB or ng-eNB base station) and an enhanced user equipment node with TT functionality (UE/TT) 222. In some embodiments, the UE/TT node 222 is a remote device or terminal, separate from the TSN end station 206, that is communicatively coupled to the TSN end station 206 and communicatively coupled to the NG-RAN node 220. As used herein, "communicatively coupled" means capable of communicating data or information by any known means such as electromagnetic wireless communication technologies, wired communication technologies, fiber optic communication technologies, etc. In alternative embodiments, the UE/TT node 222 may be a device or circuit (RF circuit, SIM card, etc.) that is part the TSN end station 206 and communicatively coupled to the NG-RAN node 220. Conventional functions of each of the nodes 210-222, known in the art, are not described herein.

In some embodiments, the 5G System specific procedures in the 5G core network (5GC) and NG-RAN, wireless communication links, etc., remain hidden from the TSN network. Thus, from the perspective of the TSN 200, the 5G system 204 is viewed as a physical TSN bridge. To achieve transparency to the TSN 200, the 5G system 204 provides TSN ingress and egress ports via the UE/TT node 222 on UE side and via the UPF/TT node 210 and AF/TT node 212 on the 5GC side towards the TSN network, which includes the CNC 202 and TSN entity 208. In some embodiments, for one particular TSN network, the virtual TSN bridge 204 is defined on a per UPF granularity basis, which means all PDU sessions for the particular TSN network processed by the same UPF/TT node 210 will define one virtual TSN bridge having a TSN bridge ID. In some embodiments, it is possible that multiple TSN networks are communicatively coupled to the same port of the UPF/TT node 210 and the AF/TT node 212 of a 5G system 204. In such a scenario, the 5G system 204 can function as multiple virtual TSN bridges, each virtual TSN bridge acting as bridge for a respective one of the multiple TSN networks.

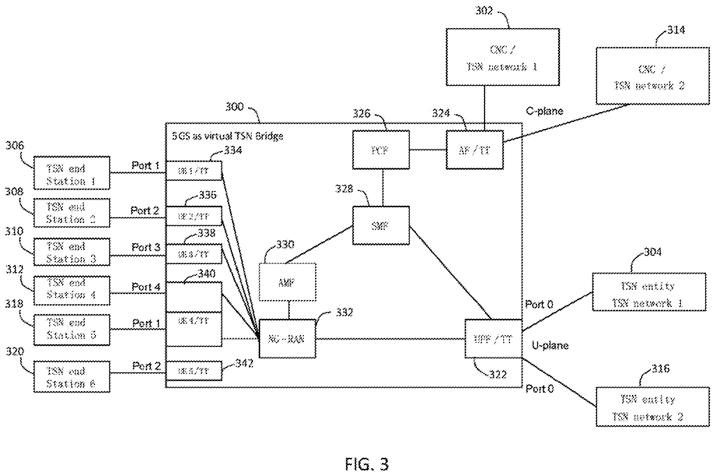

Figure 3 illustrates a block diagram of a 5G system 300 that functions as two virtual TSN bridges for two TSN networks, TSN network-1 and TSN network-2, respectively, in accordance with some embodiments. The first TSN network includes a first CNC 302, a first TSN network entity 304 on the user plane side, a first TSN end station 306, a second TSN end station 308, a third TSN end station 310 and fourth TSN end station 312. The second TSN network consists of a second CNC 314, a second TSN entity 316 on the user plane side, a fifth TSN end station 318 and a sixth TSN end station 320. As shown in Figure 3, the 5G system 300 further includes a UPF/TT node 322, a AF/TT node 324, a PCF node 326, a SMF node 328, an AMF node 330 and a NG-RAN node 332 (e.g., gNB or ng-eNB node). The functions of nodes 302-332 are similar to the corresponding functions described above and are not repeated here.

To function as a virtual TSN bridge for the first TSN network, the 5G system 300 further includes first, second, third and fourth UE/TT nodes, 334, 336, 338 and 340, respectively, that provide UE/TT functionality to the first, second, third and fourth end stations 306, 308, 310 and 312, respectively. To function as a virtual TSN bridge for the second TSN network, the 5G system 300 includes a fifth UE/TT node 342 that provides UE/TT functionality to the sixth TSN end station 320. As shown in Figure 3, the fourth UE/TT node 340 can also provide UE/TT functionality to the fifth TSN end station 318. Thus, the fourth UE/TT node 340 can be shared by TSN end stations 312 and 318, which belong to different TSN networks, in accordance with some embodiments.

Thus, from the perspective of the first TSN network, the 5G system 300 provides a first TSN bridge with a first Bridge ID (e.g., a value that identifies the first virtual TSN bridge). From the perspective of the second TSN network, the 5G system 300 provides a second TSN bridge with a second Bridge ID. In some embodiments, the first and second Bridge IDs can either be the same or different. Since the first and second TSN networks are different TSN networks, the 5G system 300 can use the same or different Bridge ID for both TSN networks.

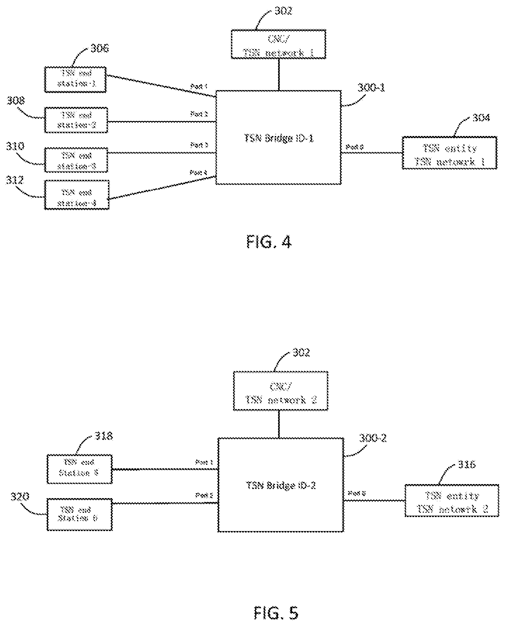

However, within one virtual TSN bridge, as seen by one TSN network, each physical port has a unique port number, in accordance with some embodiments. Figure 4 illustrates a first virtual bridge 300-1 provided by the 5G system 300 (Fig. 3) from the perspective of the first TSN network comprising TSN entities 302-312. As shown in Figure 4, each of the physical ports communicatively coupled to the TSN entities 304-312 of the first TSN network has a unique port number (port 0, port 1, port 2, port 3 and port 4).

Figure 5 illustrates a block diagram of a second virtual TSN bridge 300-2 provided by the 5G system 300 (Fig. 3) from the perspective of the second TSN network that includes TSN entities 314-320. As shown in Figure 5, similar to Figure 4, each of the physical ports communicatively coupled to the TSN entities 316-320 of the second TSN network has a unique port number (port 0, port 1 and port 2) as seen from the perspective of the second TSN network. Note, however, the physical ports servicing the second TSN network can have the same port numbers (port 0, port 1 and port 2) as physical ports servicing the first TSN network. This is because PDU sessions for different TSN networks can be differentiated from each other by the UPF/TT 322 since the 5G system 300 knows the relationships between PDU sessions and the TSN networks. For example, referring again to Figure 3, the UPF/TT node 322 connects to both the first and second TSN network entities 304 and 316, respectively, using different physical ports, with the same port number (port 0).

As described above, keeping track of Bridge ID's and port numbers can be complex, especially if a 5G system serves as virtual TSN bridge for a large number of TSN networks. Therefore, in order to implement the above-described virtual TSN bridge functions, a unique port number allocation protocol is required in the enhanced 5G system 300 and the UE/TT nodes 222 (Fig. 2) and 334-342 (Fig. 3) are required to know the Bridge ID and respective unique port numbers for each virtual TSN bridge to perform neighborhood topology discovery, for example.

In accordance with some embodiments, a method for PDU session establishment in a TSN network includes the following operations: the UPF/TT node allocates a bridge port number for the PDU session and sends it to the SMF node when the UE/TT node requests a PDU session to be established; the SMF node then sends the allocated bridge port number to the UE node. Optionally, in some embodiments, in addition to the bridge port number, the SMF may send Bridge Information (e.g., a Bridge ID and/or TSN network information) corresponding to the bridge port number to UE/TT node in order to establish the PDU session.

In further embodiments, the SMF may send TSN network information to the UPF/TT node in N4 session request and the UPF/TT will respond with the allocated bridge port number. As a further option, in some embodiments, the SMF may send information associated with multiple TSN networks to the UPF in a N4 session request and the UPF/TT will respond with an allocated bridge port number for every TSN network. Note, when the UPF/TT connects to multiple TSN networks, for each TSN network, the UPF/TT looks like a TSN bridge. In further embodiments, the SMF may send multiple set of bridge port numbers and/or Bridge Information) to the UE/TT. The Bridge Information may include a Bridge ID and/or TSN network information, which may include a TSN domain number, for example.

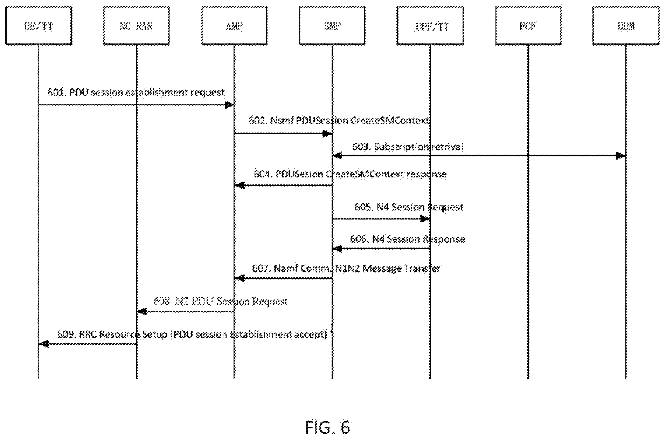

Figure 6 illustrates a signaling protocol for a method of PDU session establishment by a virtual TSN bridge, in accordance with some embodiments of the invention. The network entities shown in Figure 6 (e.g., AMF, SMF, UPF/TT, etc.) correspond to the same types of network entities described above. Additionally, a unified data management (UDM) node is shown, which is known in the art. For purposes of clarity, unrelated network entities and steps are not shown in Figure 6.

At operation 601, the UE/TT sends a PDU session establishment Request to theAMF. Next, at operation 602, the AMF invokes a Nsmf_PDUSession_CreateSMContext service operation towards the SMF. At operation 603, the SMF retrieves the UE SM subscription data from the UDM node. At operation 604, if the SMF is able to process the PDU Session establishment request, the SMF creates a session management (SM) context and responds to the AMF by providing an SM Context ID. Next, at operation 605, the SMF sends a N4 session request to the UPF/TT. Optionally, in operation 605, the SMF can include the TSN network information in the N4 session request sent to the UPF/TT. If the UE/TT can access multiple TSN networks and/or the UPF/TT connects to multiple TSN networks, the SMF can include the TSN network information for each TSN network in the message.

Next, at operation 606, the UPF/TT acknowledges receipt of the N4 session request by sending an N4 session response to the SMF, which includes the allocated bridge port number for the PDU session. Optionally, the N4 session response can further include a Bridge ID for the TSN network. If UPF/TT receives information for multiple TSN networks, the N4 session response message can include a bridge port number for the PDU session and/or Bridge ID for each TSN network. At operation 607, the SMF invokes a Namf_Communication_N1N2 Message Transfer to the AMF, which includes the N2 SM information and N1 SM container. It also includes Bridge Port information. The Bridge Port information includes the Bridge ID and Bridge Port number. Optionally, the TSN network information related to the Bridge is included. If the UPF/TT allocates Bridge Port numbers for multiple virtual bridges, multiple (Bridge ID, Bridge Port number, TSN network information) sets are included in the Bridge Port information. The Bridge Port information may be included in the N1 SM container, or in a standalone Information Element (IE).

At operation 608, the AMF sends a N2 PDU Session Request to the NG-RAN node, which includes an N1 SM container and the Bridge Port information. The Bridge Port information may be included in the N1 SM container, or in a standalone IE. Finally, at operation 609, the NG-RAN uses the time and Quality of Service (QoS) information in the N2 SM information for radio resource establishment and sends the N1 SM container and Bridge Port information to the UE/TT node in the Radio Resource Control (RRC) signaling to accept the PDU session establishment. In some embodiments, the Bridge Port information may be included in the N1 SM container, or in a standalone IE.

In alternative embodiments, a method of PDU session establishment can implement the following operations: the SMF allocates the bridge port number and sends it to the UE/TT when the UE/TT requests a PDU session to be established. In some embodiments, the UPF may send a Bridge port number range to the SMF. Then the SMF allocates the Bridge port number according to the range. Further, in some embodiments, when the UPF/TT connect to multiple TSN networks, it may send a Bridge port number range for every virtual TSN Bridge to the SMF. Note, in this case, the UPF/TT functions to provide multiple TSN bridges. In some embodiments, in addition to bridge port number, the SMF may send Bridge information (e,g Bridge ID and/or TSN network information) corresponding to the bridge port number to UE/TT during the PDU session establishment. Optionally, the SMF may send multiple (Bridge port number and/or Bridge information) sets for respective ones of multiple TSN networks to the UE/TT node. In accordance with some embodiments, the Bridge information may be Bridge ID and/or TSN network information, and the TSN network information may include a TSN domain number.

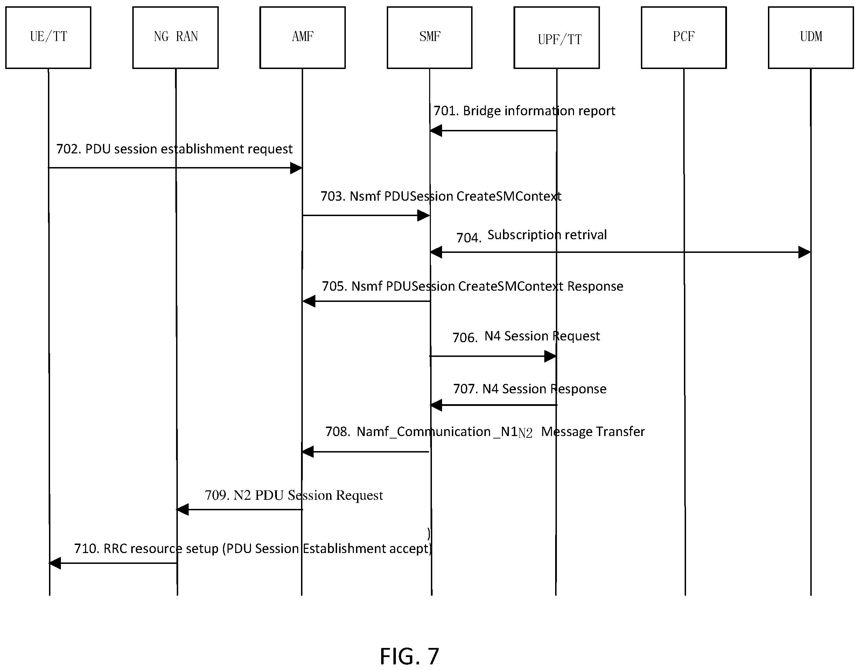

Figure 7 illustrates a signaling protocol for a method of PDU session establishment by a virtual TSN bridge, in accordance with further embodiments of the invention. The network entities shown in Figure 7 (e.g., AMF, SMF, UPF/TT, etc.) correspond to the same types of network entities described above. For purposes of clarity, unrelated network entities and steps are not shown in Figure 7.

At operation 701, the UPF/TT sends bridge port information to the SMF. In some embodiments, the bridge port information includes a port number range for one virtual TSN bridge. The SMF can then allocate port number within the range for a PDU session utilizing the TSN bridge. Thus, if UPF/TT is controlled by multiple SMFs, each SMF will not assign overlapping port numbers with one another if the port number ranges allocated to each SMF do not overlap with each other. When the UPF connects with multiple TSN network, i.e. 5GS act as virtual TSN Bridge for every TSN network, the UPF/TT sends to the SMF the Bridge port information of the virtual bridge for every TSN network. The bridge port information can include TSN network information, Bridge ID, port range, etc.

Next, at operation 702, the UE/TT sends a PDU Session establishment Request to the AMF. At operation 703, the AMF invokes an Nsmf_PDUSession_CreateSMContext service operation towards SMF. At operation 704, the SMF retrieves the UE SM subscription data from the UDM. At operation 705, if the SMF is able to process the PDU Session establishment request, the SMF creates an SM context and responds to the AMF by providing an SM Context ID. Next, at operation 706, the SMF sends an N4 session request to the UPF/TT. At operation 707, the UPF acknowledges by sending an N4 Session Response back to the SMF. At operation 708, the SMF allocates a bridge port number for the PDU session and invokes Namf_Communication_N1N2MessageTransfer to the AMF, which includes the N2 SM information, N1 SM container and Bridge Port information. The Bridge Port information includes Bridge ID and Bridge Port number. Optionally, TSN network information related to the Bridge is included. If the UE/TT can access multiple TSN networks and SMF has obtained the Bridge information for these TSN networks, the SMF allocates a bridge port number for every virtual bridge for each of the multiple TSN networks. Further, if the SMF allocates a bridge port number for multiple virtual bridges, in some embodiments, sets of (Bridge ID, bridge port number, TSN network information) information for respective ones of the multiple virtual bridges is included as bridge port information. The bridge port information may be included in the N1 SM container, or in a standalone IE. At operation 709, the AMF sends to the NG-RAN node an N2 PDU Session Request, which includes an N1 SM container and the bridge port information. The bridge port information may be included in the N1 SM container, or in a standalone IE. Finally, in operation 710, the NG-RAN node uses the time and Qos information in the N2 SM information for radio resource establishment and sends the N1 SM container and bridge port information to the UE/TT in the RRC signaling to accept the PDU session establishment. In accordance with various embodiments, the bridge port information may be included in the N1 SM container, or in a standalone IE.

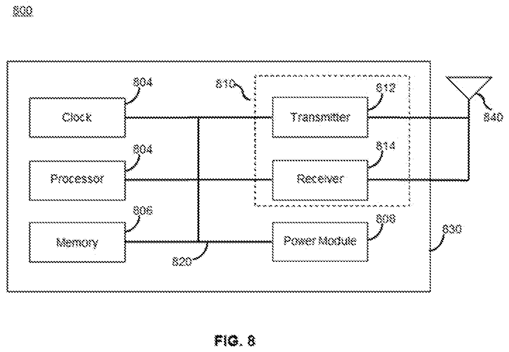

Figure 8 illustrates a block diagram of a network node 800 of a wireless system, in accordance with some embodiments of the present disclosure. The network node 800 is an example of a network node that can be configured to implement the various methods described herein. As shown in Figure 8, the network node 800 includes a system clock 802, a processor 804, a memory 806, a power module 808, a transceiver 810 comprising a transmitter 812 and receiver 814, and a system bus 820, all contained in a housing 830. The network node 800 further includes at least one antenna 840 coupled to the transceiver 810 and attached to the housing 830.

In this embodiment, the system clock 802 provides the timing signals to the processor 704 for controlling the timing of all operations of the network node 700. The processor 704 controls the general operation of the network node 700 and can include one or more processing circuits or modules such as a central processing unit (CPU) and/or any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable circuits, devices and/or structures that can perform calculations or other manipulations of data.

The memory 806, which can include both read-only memory (ROM) and random access memory (RAM), can provide instructions and data to the processor 804. A portion of the memory 806 can also include non-volatile random access memory (NVRAM). The processor 804 typically performs logical and arithmetic operations based on program instructions stored within the memory 806. The instructions (a.k.a., software) stored in the memory 806 can be executed by the processor 804 to perform the methods described herein. The processor 804 and memory 706 together form a processing system that stores and executes software. As used herein, "software" means any type of instructions, whether referred to as software, firmware, middleware, microcode, etc. which can configure a machine or device to perform one or more desired functions or processes. Instructions can include code (e.g., in source code format, binary code format, executable code format, or any other suitable format of code). The instructions, when executed by the one or more processors, cause the processing system to perform the various functions described herein.

The transceiver 810, which includes the transmitter 812 and receiver 814, allows the network node 800 to transmit and receive data to and from a remote device (e.g., another network node). The antenna 840 is typically attached to the housing 830 and electrically coupled to the transceiver 810. In various embodiments, the network node 800 includes (not shown) multiple transmitters, multiple receivers, and multiple transceivers. In one embodiment, the antenna 840 includes a multi-antenna array that can form a plurality of beams each of which points in a distinct direction. The transmitter 812 can be configured to wirelessly transmit packets having different packet types or functions, such packets being generated by the processor 804. Similarly, the receiver 814 is configured to receive packets having different packet types or functions, and the processor 804 is configured to process packets of a plurality of different packet types. For example, the processor 804 can be configured to determine the type of packet and to process the packet and/or fields of the packet accordingly.

According to various embodiments, the network node 800 may be configured to perform the function of any one of the network nodes illustrated in Figures 1-7 and described above. For example, the network node 800 may be configured to perform the functions of the UPF/TT node, a SMF node, an AMF node, or a UE/TT node, as described above.

The power module 808 can include a power source such as one or more batteries, and a power regulator, to provide regulated power to each of the above-described modules in Figure 7. In some embodiments, if the network node 800 is coupled to a dedicated external power source (e.g., a wall electrical outlet), and the power module 808 can include a transformer and a power regulator.

The various modules discussed above are coupled together by the bus system 820. The bus system 820 can include a data bus and, for example, a power bus, a control signal bus, and/or a status signal bus in addition to the data bus. It is understood that the modules of the network node 800 can be operatively coupled to one another using any suitable techniques and mediums.

Although a number of separate modules or components are illustrated in Figure 8, persons of ordinary skill in the art will understand that a single module can be divided into multiple modules or a plurality of modules can be combined or commonly implemented. For example, the processor 804 can implemented either as a single module or as a plurality of modules to perform the various functions described herein.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques.

To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, module, etc. can be configured to perform one or more of the functions described herein. The term "configured to" or "configured for" as used herein with respect to a specified operation or function refers to a processor, device, component, circuit, structure, machine, module, etc. that is physically constructed, programmed and/or arranged to perform the specified operation or function.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for session establishment, comprising:
receiving (601, 702), by an access and mobility control function, AMF, node, a session establishment request associated with a user equipment device, UE, communicatively coupled to a communication network comprising a time sensitive network, TSN;
in response to the session establishment request, allocating, by a user plane function, UPF, node or a session management function, SMF, node, a bridge port number to the UE, wherein the bridge port number identifies a port of a network bridge, comprising a TSN bridge, that communicatively couples the UE with the communication network;
**characterised by**:
transmitting (607, 708) by the SMF node to the UE, via the AMF node, bridge information comprising the bridge port number and TSN network information.

2. The method of claim 1, further comprising:
transmitting, by the SMF node, identifier, ID, information associated with the network bridge.

3. The method of claim 1, further comprising:
transmitting, by the UPF node to the SMF node, the bridge port number.

4. A method for session establishment, comprising:
transmitting (601, 702), by a user equipment device, UE, communicatively coupled to a communication network comprising a time sensitive network, TSN, a session establishment request to an access and mobility function, AMF, node,
wherein a bridge port number is allocated to the UE by a user plane function, UPF, node or a session management function, SMF, node, and wherein the bridge port number identifies a port of a network bridge, comprising a TSN bridge, that communicatively couples the UE with the communication network;
**characterised by**:
receiving (609, 710), by the UE from the AMF node, bridge information comprising the bridge port number and TSN network information.

5. A communication system comprising:
an access and mobility control function, AMF, node (218) configured to receive a session establishment request associated with a user equipment device, UE, (222) communicatively coupled to a communication network comprising a time sensitive network, TSN;
a user plane function, UPF, node (210) and a session management function, SMF, node (216),
wherein in response to the session establishment request, the UPF node (210) or the SMF node (216) is configured to allocate a bridge port number to the UE (222), wherein the bridge port number identifies a port of a network bridge, comprising a TSN bridge, that communicatively couples the UE (222) with the communication network;
**characterised in that**
the SMF node (216) is configured to transmit, via the AMF node (218), to the UE (222), bridge information comprising the bridge port number and TSN network information.

6. The communication system of claim 5, wherein the SMF node is further configured to transmit identifier, ID, information associated with the network bridge.

7. The communication system of claim 5, wherein the UPF node is further configured to transmit the bridge port number to the SMF node.

8. A user equipment, UE, (222) comprising a processor and a memory comprising instructions that, when executed by the processor, cause the processor to:
transmit a session establishment request to an access and mobility function, AMF, node (218),
wherein a bridge port number is allocated to the UE (222) communicatively coupled to a communication network comprising a time sensitive network, TSN, by a user plane function, UPF, node (210) or a session management function, SMF, node (216), and wherein the bridge port number identifies a port of a network bridge, comprising a TSN bridge, that communicatively couples the UE (222) with the communication network;
**characterised in that** instructions further cause the processor to receive, from the AMF node (218), bridge information comprising the bridge port number and TSN network information.

## Patentansprüche

1. Verfahren zum Sitzungsaufbau, das aufweist:
Empfangen (601, 702), durch einen Zugangs- und Mobilitätssteuerfunktions-, AMF-, Knoten, einer Sitzungsaufbauanforderung, die mit einem Benutzergerät, UE, assoziiert ist, das kommunikativ mit einem Kommunikationsnetzwerk gekoppelt ist, das ein zeitempfindliches Netzwerk, TSN, aufweist,
als Antwort auf die Sitzungsaufbauanforderung, Zuweisen, durch einen Benutzerebenenfunktions-, UPF-, Knoten, oder einen Sitzungsverwaltungsfunktions-, SMF-, Knoten, einer Brückenportnummer an das UE, wobei die Brückenportnummer einen Port einer Netzwerkbrücke identifiziert, die eine TSN-Brücke aufweist, die das UE kommunikativ mit dem Kommunikationsnetzwerk koppelt;
**gekennzeichnet durch**:
Übertragen (607, 708), durch den SMF-Knoten an das UE, über den AMF-Knoten, von Brückeninformationen, die die Brückenportnummer und TSN-Netzwerkinformationen aufweisen.

2. Verfahren nach Anspruch 1, das ferner aufweist:
Übertragen, durch den SMF-Knoten, von Kennungs-, ID, Informationen, die mit der Netzwerkbrücke assoziiert sind.

3. Verfahren nach Anspruch 1, das ferner aufweist:
Übertragen der Brückenportnummer durch den UPF-Knoten an den SMF-Knoten.

4. Verfahren zum Sitzungsaufbau, das aufweist:
Übertragen (601, 702), durch ein Benutzergerät, UE, das kommunikativ mit einem Kommunikationsnetzwerk gekoppelt ist, das ein zeitempfindliches Netzwerk, TSN, aufweist, einer Sitzungsaufbauanforderung an einen Zugangs- und Mobilitätssteuerfunktions-, AMF-, Knoten,
wobei eine Brückenportnummer dem UE durch einen Benutzerebenenfunktions-, UPF-, Knoten, oder einen Sitzungsverwaltungsfunktions-, SMF-, Knoten zugewiesen wird, und wobei die Brückenportnummer einen Port einer Netzwerkbrücke identifiziert, die eine TSN-Brücke aufweist, die das UE kommunikativ mit dem Kommunikationsnetzwerk koppelt;
**gekennzeichnet durch**:
Empfangen (609, 710), durch das UE von dem AMF-Knoten, von Brückeninformationen, die die Brückenportnummer und TSN-Netzwerkinformationen aufweisen.

5. Kommunikationssystem, das aufweist:
einen Zugangs- und Mobilitätssteuerungsfunktions-, AMF-, Knoten (218), der konfiguriert ist, eine Sitzungsaufbauanforderung zu empfangen, die mit einem Benutzergerät, UE, (222) assoziiert ist, das kommunikativ mit einem Kommunikationsnetzwerk gekoppelt ist, das ein zeitempfindliches Netzwerk, TSN, aufweist;
einen Benutzerebenenfunktions-, UPF-, Knoten (210) und einen Sitzungsverwaltungsfunktions-, SMF-, Knoten (216),
wobei als Reaktion auf die Sitzungsaufbauanforderung der UPF-Knoten (210) oder der SMF-Knoten (216) konfiguriert ist, dem UE (222) eine Brückenportnummer zuzuweisen, wobei die Brückenportnummer einen Port einer Netzwerkbrücke identifiziert, die eine TSN-Brücke aufweist, die das UE (222) kommunikativ mit dem Kommunikationsnetzwerk koppelt;
**dadurch gekennzeichnet, dass**
der SMF-Knoten (216) konfiguriert ist, über den AMF-Knoten (218) an das UE (222) Brückeninformationen zu übertragen, die die Brückenportnummer und TSN-Netzwerkinformationen aufweisen.

6. Kommunikationssystem nach Anspruch 5, wobei der SMF-Knoten ferner konfiguriert ist, Kennungs-, ID-, Informationen zu übertragen, die mit der Netzwerkbrücke assoziiert sind.

7. Kommunikationssystem nach Anspruch 5, wobei der UPF-Knoten ferner konfiguriert ist, die Brückenportnummer an den SMF-Knoten zu übertragen.

8. Benutzergerät, UE, (222), das einen Prozessor und einen Speicher aufweist, der Anweisungen aufweist, die, wenn sie von dem Prozessor ausgeführt werden, den Prozessor veranlassen:
eine Sitzungsaufbauanforderung an einen Zugangs- und Mobilitätssteuerungsfunktions-, AMF-, Knoten (218) zu übertragen,
wobei eine Brückenportnummer einem UE (222), das kommunikativ mit einem Kommunikationsnetzwerk gekoppelt ist, das ein zeitempfindliches Netzwerk, TSN, aufweist, durch einen Benutzerebenenfunktions-, UPF-, Knoten (210) oder einen Sitzungsverwaltungsfunktions-, SMF-, Knoten (216) zugewiesen wird, und wobei die Brückenportnummer einen Port einer Netzwerkbrücke identifiziert, die eine TSN-Brücke aufweist, die das UE (222) kommunikativ mit dem Kommunikationsnetzwerk koppelt;
**dadurch gekennzeichnet, dass** Anweisungen den Prozessor ferner veranlassen, von dem AMF-Knoten (218) Brückeninformationen zu empfangen, die die Brückenportnummer und TSN-Netzwerkinformationen aufweisen.

## Revendications

1. Procédé d'établissement de session, comprenant :
la réception (601, 702), par un nœud de fonction de commande d'accès et de mobilité, AMF, d'une demande d'établissement de session associée à un dispositif d'équipement utilisateur, UE, relié de manière communicante à un réseau de communication comprenant un réseau sensible au temps, TSN ;
en réponse à la demande d'établissement de session, l'attribution à l'UE, par un nœud de fonction de plan utilisateur, UPF, ou un nœud de fonction de gestion de session, SMF, d'un numéro de port de pont, ledit numéro de port de pont identifiant un port d'un pont de réseau, comprenant un pont TSN, reliant de manière communicante l'UE au réseau de communication ;
**caractérisé par** :
la transmission (607, 708) par le nœud SMF à l'UE, via le nœud AMF, d'informations de pont comprenant le numéro de port de pont et des informations de réseau TSN.

2. Procédé selon la revendication 1, comprenant en outre :
la transmission, par le nœud SMF, d'informations d'identification, ID, associées au pont de réseau.

3. Procédé selon la revendication 1, comprenant en outre :
la transmission, par le nœud UPF au nœud SMF, du numéro de port de pont.

4. Procédé d'établissement de session, comprenant :
la transmission (601, 702), par un équipement d'utilisateur, UE, relié de manière communicante à un réseau de communication comprenant un réseau sensible au temps, TSN, d'une demande d'établissement de session à un nœud de fonction de commande d'accès et de mobilité, AMF,
où un numéro de port de pont est attribué à l'UE par un nœud de fonction de plan utilisateur, UPF, ou par un nœud de fonction de gestion de session, SMF, et où le numéro de port de pont identifie un port d'un pont de réseau, comprenant un pont TSN, reliant de manière communicante l'UE au réseau de communication ;
**caractérisé par** :
la réception (609, 710) par l'UE en provenance du nœud AMF, d'informations de pont comprenant le numéro de port de pont et des informations de réseau TSN.

5. Système de communication, comprenant :
un nœud de fonction de commande d'accès et de mobilité, AMF, (218), configuré pour recevoir une demande d'établissement de session associée à un équipement utilisateur, UE, (222), relié de manière communicante à un réseau de communication comprenant un réseau sensible au temps, TSN ;
un nœud (210) de fonction de plan utilisateur, UPF, et un nœud (216) de fonction de gestion de session, SMF,
où, en réponse à la demande d'établissement de session, le nœud UPF (210) ou le nœud SMF (216) est configuré pour attribuer un numéro de port de pont à l'UE (222),
où le numéro de port de pont identifie un port d'un pont de réseau, comprenant un pont TSN, reliant de manière communicante l'UE (222) au réseau de communication ;
**caractérisé en ce que**
le nœud SMF (216) est configuré pour transmettre à l'UE (222), via le nœud AMF (218), des informations de pont comprenant le numéro de port de pont et des informations de réseau TSN.

6. Système de communication selon la revendication 5, où le nœud SMF est en outre configuré pour transmettre des informations d'identifiant, **ID,** associées au pont de réseau.

7. Système de communication selon la revendication 5, où le nœud UPF est en outre configuré pour transmettre le numéro de port de pont au nœud SMF.

8. Équipement utilisateur, UE, (222) comprenant un processeur et une mémoire comprenant des instructions dont l'exécution par le processeur entraîne celui-ci à :
transmettre une demande d'établissement de session à un nœud de fonction de commande d'accès et de mobilité, AMF, (218),
où un numéro de port de pont est attribué à l'UE (222) relié de manière communicante à un réseau de communication comprenant un réseau sensible au temps, TSN, par un nœud de fonction de plan utilisateur, UPF, (210), ou un nœud de fonction de gestion de session, SMF, (216), et où le numéro de port de pont identifie un port d'un pont de réseau, comprenant un pont TSN, reliant de manière communicante l'UE (222) au réseau de communication ;
**caractérisé en ce que** lesdites instructions entraînent en outre la réception par le processeur, en provenance du nœud AMF (218), d'informations de pont comprenant le numéro de port de pont et des informations de réseau TSN.
